(19) Europäisches Patentamt
European Patent Office
Office européen des brevets

(11) EP 1 890 064 A2

(12) EUROPEAN PATENT APPLICATION

(43) Date of publication:
20.02.2008 Bulletin 2008/08

(51) Int Cl.:
F16K 47/04 (2006.01)     F16K 25/00 (2006.01)

(21) Application number: 07012141.3

(22) Date of filing: 21.06.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 16.08.2006 KR 20060077268

(71) Applicant: Volvo Construction Equipment Holding
Sweden AB
631 85 Eskilstuna (SE)

(72) Inventor: Kim, Jin Wook
Kyungsangnam-do (KR)

(74) Representative: Dr. Weitzel & Partner
Friedenstrasse 10
89522 Heidenheim (DE)

(54) **Pressure control valve**

(57)     A pressure control valve is disclosed, which can suppress the generation of noise and vibration due to cavitation when hydraulic fluid is fed from a high-pressure side to a low-pressure side, which is caused by the change of a pilot poppet structure that is in detachable contact with a seat of the pressure control valve to close/open a flow path. The pressure control valve includes a pilot poppet (2), being detachably in contact with a two-stage seat formed in a flow path connecting a high-pressure path (1) with a low-pressure path (4), for closing/opening the flow path, an elastic member (3) for elastically biasing the pilot poppet (2), which has been pressed onto the seat (5) to close the flow path, to its initial state, and a ring-shaped balancing groove (6) formed on a periphery of the pilot poppet (2) that forms a ring-shaped gap in association with the seat (5) when the pilot poppet is lifted from the seat.

## Fig. 4

EP 1 890 064 A2

## Description

### CROSS-REFERENCE TO RELATED APPLICATION

This application is based on and claims priority from Korean Patent Application No. 10-2006-0077268, filed on August 16, 2006 in the Korean Intellectual Property Office, the disclosure of which is incorporated herein in its entirety by reference.

### BACKGROUND OF THE INVENTION

### Field of the invention

The present invention relates to a pilot poppet type pressure control valve which is shifted so as to feed high-pressure hydraulic fluid on a hydraulic pump side back to a hydraulic tank if the pressure of the hydraulic fluid on the hydraulic pump side is heightened over a predetermined pressure, thereby protecting a hydraulic system.

More particularly, the present invention relates to a pressure control valve that can suppress the generation of noise and vibration due to cavitation when hydraulic fluid is fed from a high-pressure side to a low-pressure side, which is caused by the change of a pilot poppet structure that is in detachable contact with a seat of the pressure control valve to close/open a flow path.

Hereinafter, a term "a ring-shaped gap" means a ring-shaped opening formed between the seat and the pilot poppet when the pilot poppet is lifted from the seat and is in a relief state.

### Description of the Prior Art

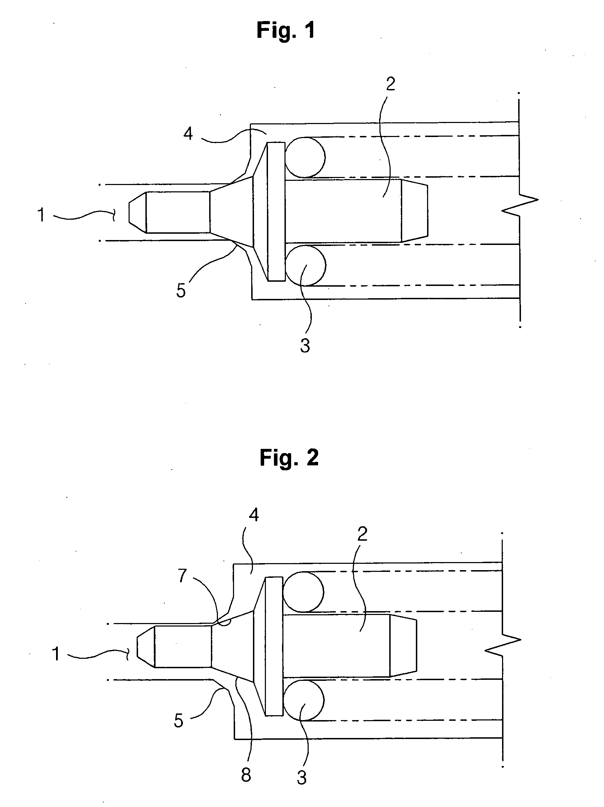

As shown in FIGS. 1 and 2, a conventional pilot-poppet type pressure control valve includes a two-stage seat 5 formed in a flow path connecting a high-pressure path 1 with a low-pressure path 4, a pilot poppet 2, being detachably in line contact with the seat 5, for closing/opening the flow path, and an elastic member (e.g., a compression coil spring) 3 for elastically biasing the pilot poppet 2, which has been pressed onto the seat 5 to close the flow path, to return the pilot poppet 2 to its initial state.

In the above-described pressure control valve structure, if the pressure of hydraulic fluid in the high-pressure path 1 exceeds a predetermined pressure of the elastic member 3, the pilot poppet 2 is lifted from the seat 5. Accordingly, the hydraulic fluid of the high-pressure path 1 is moved to the low-pressure path 4, and thus a hydraulic system that is shifted to be in a relief state can be protected.

In this case, when the pilot poppet 2 is lifted from the second-step seat 5 to be in a relief state and the hydraulic fluid on the high-pressure path 1 is moved to the low-pressure path 4 through the seat 5, the high-pressure hydraulic fluid becomes in contact with the seat 5 to generate bubbles, and thus cavitation occurs. Since this cavitation causes the generation of the vibration and noise, the hydraulic system becomes unstable.

As shown in FIG. 2, when the pilot poppet 2 is lifted from the seat 5 to be in a relief state, a ring-shaped gap formed between the seat 5 and the pilot poppet 2 may be kept in an eccentric state in which upper and lower parts of the gap are not uniform. That is, the ring-shaped gap formed between the seat 5 and the upper surface of the pilot poppet 2 may become narrow, and the ring-shaped gap formed between the seat 5 and the lower surface of the pilot poppet 2 may become wide relatively. By contrast, the ring-shaped gap formed between the seat 5 and the pilot poppet 2 may become eccentric.

Accordingly, when the pilot poppet 2 is lifted from the seat 5, it is supported only by the elastic member 3, and thus it is floating inside the low-pressure path 4. That is, when the hydraulic fluid in the high-pressure path 1 is moved to the low-pressure path 4, passing around the pilot poppet 2, it comes into contact with sharp parts of the seat 5 to generate bubbles. This bubble generation causes the occurrence of cavitation and bubble breakage (i.e., removal), and accordingly, it becomes difficult to maintain the ring-shaped gap without the occurrence of eccentricity in the ring-shaped gap.

In this case, the eccentricity of the pilot poppet 2 may also occur due to the shape of the right-angled elastic member 3 and the degrees of parallel, right angle, and illumination of the seat 5 being detachably in contact with the pilot poppet 2 and the pilot poppet 2 that are determined when they are processed.

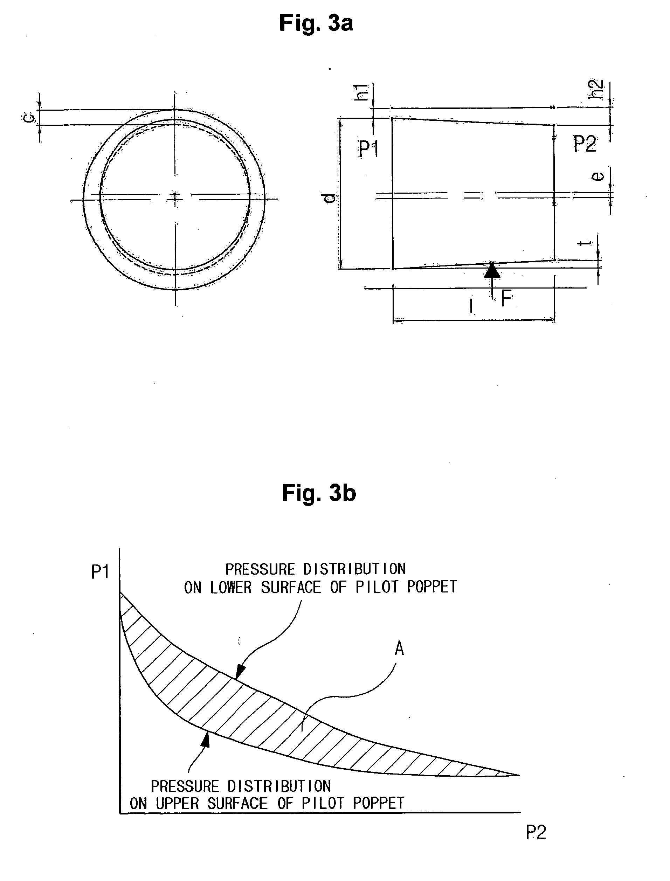

As shown in FIGS. 2, 3a and 3b, if the ring-shaped gap between the seat 5 and the pilot poppet 2 is narrow (that corresponds to an upper part 7 of the pilot poppet as illustrated in FIG. 2) when the eccentricity occurs in the pilot poppet 2 that are shifted to be in a relief state, a hydraulic fluid pressure P2 in an outlet is abruptly lowered in comparison to a hydraulic fluid pressure P1 in an inlet. By contrast, if the ring-shaped gap between the seat 5 and the pilot poppet 2 is wide (that corresponds to a lower part 8 of the pilot poppet as illustrated in FIG. 2), the change of the pressure P2 in the outlet is relatively small in comparison to the pressure P1 in the inlet.

That is, a difference in pressure between the upper and lower parts of the ring-shaped gap occurs as much as a hatched portion A as illustrated in FIGS. 3a and 3b, due to the increase of momentum of the hydraulic fluid through the ring-shaped gap between the seat 5 and the lower part 8 of the poppet 2. The occurrence of the eccentricity of the pilot poppet 2 causes the generation of a lateral thrust force, and as shown in the drawings, the high pressure on the lower part side makes the pilot poppet 2 be pushed to the upper part side having a relatively low pressure. Accordingly, the amount of eccentricity occurring in the ring-shaped gap between the seat 5 and the pilot poppet 2 is increased to cause an unstable vibration of the pilot poppet.

This unstable vibration of the pilot poppet causes the vibration and noise of the whole hydraulic system, which makes the hydraulic system unstable, and thus the working efficiency of an operator is lowered. Consequently, the pressure control valve should be replaced to cause an economic loss.

Now, the principal of generation of a lateral thrust force will be described.

As shown in FIGS. 3a and 3b, according to Blackburn's study, the lateral thrust force can be expressed as follows.

$$F = (\pi\, l\, dt\, \Delta P)\,/\, 4e \times [(2c+t)/(\sqrt{(2c+t)^2 - 4e^2}) - 1]$$

Here, $F$ denotes a lateral thrust force, $l$ the length of a gap, $d$ the diameter of a piston, $t$ a gap, $\Delta P$ a difference in pressure ($P1$-$P2$) between an inlet and an outlet, $e$ an amount of eccentricity, and $c$ the minimum gap (which is a gap in a direction of the radius of the piston having a larger diameter) when the center line of the piston coincides with the center line of a cylinder, respectively.

It can be confirmed from the above-described equation that the lateral thrust force $F$ is increased in proportion to the length of the gap $l$, the diameter of the piston $d$, the gap $t$, and the difference in pressure $\Delta P$. In this case, it is most preferable that the amount of eccentricity becomes "0".

## SUMMARY OF THE INVENTION

Accordingly, the present invention has been made to solve the above-mentioned problems occurring in the prior art while advantages achieved by the prior art are maintained intact.

One object of the present invention is to provide a pressure control valve that can stabilize a hydraulic system by preventing the generation of noise and vibration due to cavitation through offsetting of a lateral thrust force that is generated due to the occurrence of eccentricity in a ring-shaped gap between a seat and a pilot poppet of the pressure control valve.

The pressure control valve according to one embodiment of the present invention can improve the working efficiency of an operator through creation of a comfortable working environment, and prolong the life span of the pressure control valve with its manufacturing cost reduced.

In order to accomplish these objects, there is provided a pressure control valve, according to one aspect of the present invention, including a pilot poppet, being detachably in contact with a two-stage seat formed in a flow path connecting a high-pressure path with a low-pressure path, for closing/opening the flow path, and an elastic member for elastically biasing the pilot poppet, which has been pressed onto the seat to close the flow path, to its initial state, which comprises a ring-shaped balancing groove formed on a periphery of the pilot poppet that forms a ring-shaped gap in association with the seat when the pilot poppet is lifted from the seat.

At least one balancing groove is formed on the periphery of the pilot poppet.

The depth of the balancing groove formed on the periphery of the pilot poppet is set to be within 10 to 15 times the ring-shaped gap.

## BRIEF DESCRIPTION OF THE DRAWINGS

The above and other objects, features and advantages of the present invention will be more apparent from the following detailed description taken in conjunction with the accompanying drawings, in which:

FIG. 1 is a schematic view illustrating a conventional pressure control valve;
FIG. 2 is a view illustrating a pilot poppet in an eccentric state during a relief of the pressure control valve as illustrated in FIG. 1;
FIG. 3a is a schematic view illustrating the lateral thrust force according to Blackburn's study and FIG. 3b is a graph showing a pressure distribution in an eccentric state of the pilot poppet during a relief of the pressure control valve as illustrated in FIG. 2;
FIG. 4 is a schematic view of a pressure control valve according to an embodiment of the present invention;

FIG. 5 is a schematic view of a relief valve to which the pressure control value according to an embodiment of the present invention has been applied; and

FIG. 6 is a comparative graph showing a lateral thrust force of the pressure control valve according to the present invention in comparison to a lateral thrust force of the conventional pressure control valve.

## DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

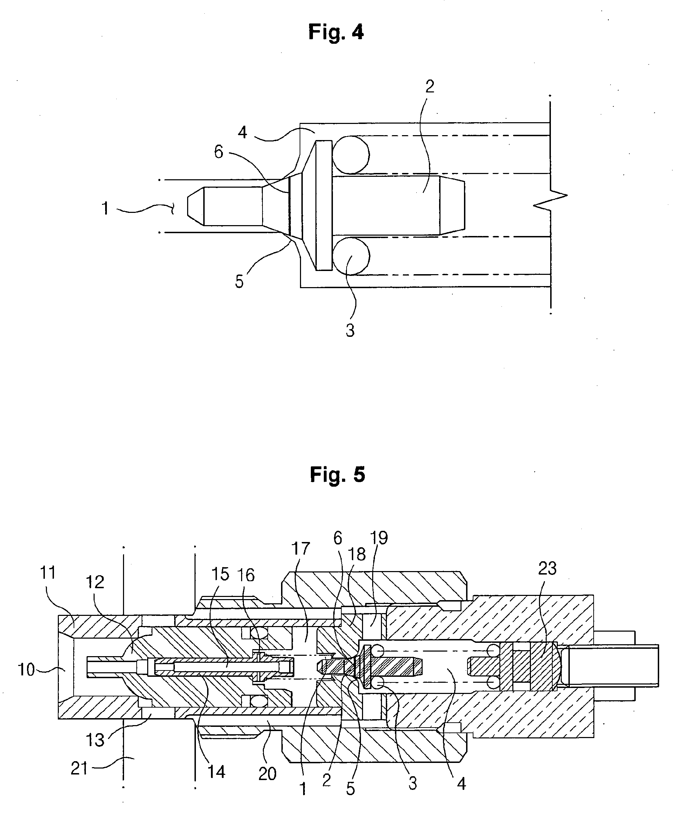

As shown in FIGS. 4 and 5, a pressure control valve according to an embodiment of the present invention includes a two-stage seat 5 formed in a flow path connecting a high-pressure path 1 with a low-pressure path 4, a pilot poppet 2, being detachably in line contact with the seat 5, for closing/opening the flow path, an elastic member (e.g., a compression coil spring) 3 for elastically biasing the pilot poppet 2, which has been pressed onto the seat 5 to close the flow path, to its initial state, and a ring-shaped balancing groove 6 formed on a periphery of the pilot poppet 2 that forms a ring-shaped gap formed between the seat 5 and the pilot poppet 2 when the pilot poppet 2 is lifted from the seat 5.

At least one balancing groove 6 is formed on the periphery of the pilot poppet 2.

The depth of the balancing groove 6 formed on the periphery of the pilot poppet 2 is set to be within 10 to 15 times the ring-shaped gap. The balancing groove 6 is widened in the case where the ring-shaped gap is long, while it is narrowed in the case where the ring-shaped gap is short.

Hereinafter, the operation of the pressure control valve according to an embodiment of the present invention will be described with reference to the accompanying drawings.

As shown in FIGS. 4 and 5, high-pressure hydraulic fluid fed into a relief valve through a pump port 10 is supplied to a back chamber 17 via orifices 15 and 16 of a piston 14 slidably installed in a main poppet 12.

When the high-pressure hydraulic fluid is supplied to the back chamber 17, the main poppet 12 is moved in the left direction as shown in FIG. 5 and is placed in a sleeve 11 due to a difference in cross-sectional area between front and rear diaphragms of the main poppet 12, so that the high-pressure hydraulic fluid being supplied through the pump port 10 is intercepted from a tank passage 21.

At this time, the high-pressure hydraulic fluid supplied to the back chamber 17 is kept in the same pressure state as that in the pump port 10.

If the pressure within the pump port 10 and the back chamber 17 is gradually increased and then becomes larger than a predetermined pressure of the elastic member (e.g., compression coil spring) 3 that elastically supports the pilot poppet 2, the pilot poppet 2 is shifted in the right direction as shown in FIG. 5 to open the flow path of the seat 5, and thus the hydraulic fluid pressure in the back chamber 17 is transferred to the low-pressure path 4.

Since the low-pressure path 4 is connected with the tank passage 21 through a passage 19 of a seat part 18 and a passage 20 formed in a sleeve to connect with the passage 19, the pressure in the back chamber 17 is abruptly lowered in comparison to the pressure on the pump port side 10. Accordingly, the piston 14 for keeping the left-right balance is moved in the right direction as shown in FIG. 5 to be in contact with a front end part of the main poppet 2. That is, the high-pressure hydraulic fluid is supplied to the back chamber 17 only through the orifice 16 (in this case, the orifice 15 is closed by the pilot poppet 2).

Accordingly, the flow rate in the back chamber 17 is reduced to further lower the hydraulic fluid pressure. This causes a loss of the pressure balance of the main poppet 12 for keeping the pressure balance by the difference in cross-sectional area between the front and rear diaphragms thereof, and thus the main poppet 12 is moved in the right direction a shown in FIG. 5. In this case, the high-pressure hydraulic fluid in the pump port 10 is supplied to the tank passage 21 through a passage 13. Accordingly, the relief valve operates to protect the hydraulic system by lowering the pressure in the back chamber even if an unexpected high-pressure is generated in the hydraulic circuit.

At this time, since the pilot poppet 2 is minutely moved in the right direction as shown in FIG. 5, the hydraulic fluid pressure in the back chamber 17 is transferred to the low-pressure path 4 to make the back chamber 17 in a low-pressure state.

In this case, since a minute ring-shaped gap is formed between the seat 5 and the pilot poppet 2, the high-pressure hydraulic fluid is fed to the low-pressure path 4. Accordingly, the high-pressure fluid, which is returned from the pump port 10 to the tank passage 21, passes through the ring-shaped gap formed in a flow path between the seat 5 and the pilot poppet 2 at high speed. In this case, if no eccentricity occurs in the ring-shaped gap, the hydraulic fluid keeps the same flow speed and thus no noise due to vibration occurs, so that the relief valve operates stably.

By contrast, if the eccentricity occurs in the ring-shaped gap due to an external environmental condition (e.g., a main cause of eccentricity occurring when the pilot poppet 2 is assembled or due to a defect in the pilot poppet structure itself), a difference in pressure between the inlet and the outlet of the seat 5 is generated depending on the size of the gap, and this causes the lateral thrust force to be generated in the pilot poppet 2. Accordingly, unstable vibration and noise are generated, and the whole hydraulic system is resonated to spread the noise and vibration, so that the hydraulic system becomes unstable.

The eccentricity in the ring-shaped gap may occur due to the inferiority in shape of the seat part 18, the pilot poppet 2, the elastic member 3, and the piston 23, depending on their degrees of parallel or right angle determined when they are processed.

On the other hand, when the pilot poppet 2 is lifted from the seat 5, it is supported only by the elastic member 3 in the low-pressure path 4, and thus it is in an unstable state. Accordingly, the pilot poppet 2 becomes unstable due to the cavitation occurring in the seat 5, bubble generation, bubble breakage (i.e., removal), and so forth, and thus the lateral thrust force may be generated in the pilot poppet 2.

As shown in FIG. 4, at least one balancing groove 6 is formed on the periphery of the pilot poppet 2 that is opposite to the two-stage seat 5 and has the ring-shaped gap between the seat 5 and the pilot poppet 2. The balancing groove 6 can suppress the generation of the lateral thrust force on the pilot poppet.

That is, when the relief valve operates, the pilot poppet 2 is minutely moved, and thus the ring-shaped gap is formed between the two-stage seat 5 and the pilot poppet 2. In this case, the size of the ring-shaped gap is also varied minutely, and through this ring-shaped gap, the high-pressure hydraulic fluid is returned to the hydraulic tank side.

The ring-shaped gap is maintained with respect to the seat 5, and the lateral thrust force of the pilot poppet 2, which is generated due to the eccentricity that compulsorily occurs in the ring-shaped gap due to the balancing groove 6 formed in the radius direction on the periphery of the pilot poppet 2 being minutely moved, can be offset.

Specifically, the ring-shaped gap is maintained with respect to the seat 5, and the hydraulic fluid pressure inside the balancing groove 6 formed on the periphery of the pilot poppet that is minutely moved exerts the same influence in the radius direction. Accordingly, the lateral thrust force of the pilot poppet 2, which is generated due to the eccentricity occurring in the ring-shaped gap due to the problems in assembly and structure of the pilot poppet 2 that is assembled to open/close the flow path of the seat 5, can be offset.

Accordingly, even if the eccentricity occurs in the ring-shaped gap between the seat 5 and the pilot poppet 2 due to an external environmental cause, the ring-shaped gap between the seat 5 and the pilot poppet 2 can be kept in a stable state.

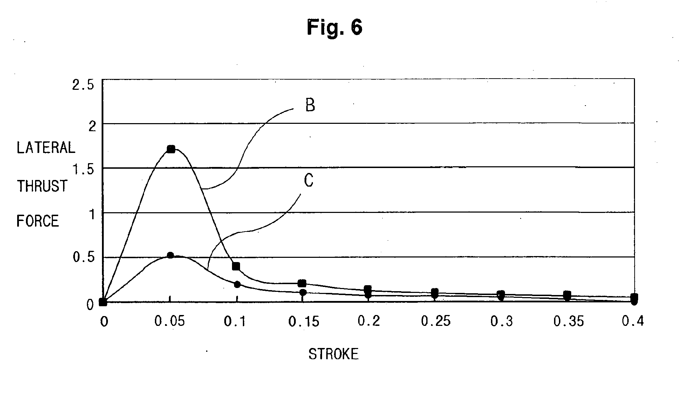

As shown in FIG. 6, upon comparing a graph C showing a lateral thrust force generated using the pilot poppet 2 according to the present invention with a graph B showing a lateral thrust force of the pilot poppet 2 according to the prior art, it can be confirmed that the lateral thrust force generated in the pilot poppet 2 having the balancing groove 6 according to the present invention is greatly reduced in comparison to that according to the prior art.

As described above, the pressure control valve according to the present invention has the following advantages.

The lateral thrust force that is generated due to the occurrence of eccentricity in the ring-shaped gap between the seat and the pilot poppet of the pressure control valve is offset, and thus the generation of noise and vibration due to the cavitation can be prevented to stabilize the hydraulic system and to improve the reliability of the heavy equipment.

The working efficiency of an operator is improved through creation of a comfortable working environment, and the life span of the pressure control valve is prolonged with its manufacturing cost reduced.

Although preferred embodiment of the present invention has been described for illustrative purposes, those skilled in the art will appreciate that various modifications, additions and substitutions are possible, without departing from the scope and spirit of the invention as disclosed in the accompanying claims.

**Claims**

1. A pressure control valve including a pilot poppet, being detachably in contact with a two-stage seat formed in a flow path connecting a high-pressure path with a low-pressure path, for closing/opening the flow path, and an elastic member for elastically biasing the pilot poppet, which has been pressed onto the seat to close the flow path, to its initial state, the pressure control valve comprising:

   a ring-shaped balancing groove formed on a periphery of the pilot poppet that forms a ring-shaped gap in association with the seat when the pilot poppet is lifted from the seat.

2. The pressure control valve of claim 1, wherein at least one balancing groove is formed on the periphery of the pilot poppet.

3. The pressure control valve of claim 1, wherein the depth of the balancing groove formed on the periphery of the pilot poppet is set to be within 10 to 15 times the ring-shaped gap.

**Fig. 1**

**Fig. 2**

## Fig. 3a

## Fig. 3b

## Fig. 4

## Fig. 5

## Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060077268